# EUROPÄISCHE PATENTANMELDUNG

(11) **EP 2 159 377 A1**
(43) Veröffentlichungstag der Anmeldung: **03.03.2010**
(21) Anmeldenummer: 08015128.5
(22) Anmeldetag: 27.08.2008
(51) Int. Cl.: F01D 5/18, F01D 11/24, F01D 25/12, F01D 25/24, F02C 7/224

(54) **Leitschaufelträger für eine Gasturbine und entsprechende Gasturbinenanlage**

(71) Anmelder: Siemens Aktiengesellschaft, 80333 München (DE)
(72) Erfinder: Benkler, Francois, Dr., 40880 Ratingen (DE); Böttcher, Andreas, Dr., 40880 Ratingen (DE); Etzold, Tino, 04600 ALtenburg (DE); Grundei, Daniel, 46049 Oberhausen (DE); Maldfeld, Ekkehard, Dr., 45479 Mühlheim an der Ruhr (DE); Meimerstorf, Maximilian, 47551 Bedburg-Hau (DE); Schneider, Oliver, Dr., 46487 Wesel (DE); Socha, Waldemar, 10555 Berlin (DE)

(57) **Zusammenfassung**

Die Erfindung betrifft einen Leitschaufelträger (10) für eine stationäre, axial durchströmte Gasturbine, welcher mit Kühlkanälen (20) versehen von einem Kühlmittel durchströmbar ist. Um eine besonders effiziente Kühlung des Turbinenleitschaufelträges (10) zu erreichen, schlägt die Erfindung vor, als Kühlmittel Natrium in den Kühlkanälen (20) vorzusehen, welches dann in einem geschlossenen Kreislauf einen ggf. externen Wärmeübertrager (30) zur Vorwärmung das der Gasturbine zuführbaren Brennstoffs genutzt werden kann.

## Beschreibung

Die Erfindung betrifft einen Leitschaufelträger für eine Gasturbine, umfassend eine rohrförmige Wand mit einem einströmseitigen Ende und einem dem einströmseitigen Ende gegenüberliegendes ausströmseitiges Ende für ein im Innenraum des Leitschaufelträgers in einem Strömungspfad der Gasturbine strömendes Fluid, wobei in der Wand zumindest ein Kühlkanal für ein Kühlmittel vorgesehen ist.

Bekannte Turbinenleitschaufelträger der eingangs genannten Art für eine stationäre Gasturbine umfassen heutzutage prinzipiell zwei identische halbrohrartige Trägerelemente, welche flanschartig miteinander verschraubt prinzipiell eine Rohrform bilden. An deren inneren Oberflächen sind entlang des Umfangs verlaufende Nuten zur Aufnahme und Befestigung von Leitschaufeln der Turbineneinheit der Gasturbine vorgesehen.

Die Turbineneinheit der Gasturbine weist zudem einen entlang der Axialerstreckung sich im Querschnitt vergrößernden Strömungspfad auf, wobei auch dessen Außendurchmesser sich dabei stetig vergrößert. In den Strömungspfad ragen die Schaufelblätter der Turbinenleitschaufeln hinein, welche am Turbinenleitschaufelträger innen befestigt sind. Aufgrund des sich in Axialrichtung vergrößernden Durchmessers des Strömungspfads ist auch der Turbinenleitschaufelträger einer solchen Gasturbine korrespondierend ausgebildet: mit einem in Strömungsrichtung sich im Mittel stetig vergrößernden Durchmesser. Es ist somit konisch ausgebildet. Bezogen auf das den Strömungspfad des Turbinenabschnitts durchströmende Heißgas weist ein Leitschaufelträger der eingangs genannten Art stets ein einströmseitiges Ende und ein ausströmseitiges Ende für das Heißgas auf. Das einströmseitige Ende des im Querschnitt ringförmigen Turbinenleitschaufelträgers weist dabei einen kleineren Radius auf als der Radius des ausströmseitigen Endes.

Am einströmseitigen Ende des Turbinenleitschaufelträgers wird das in der Brennkammer erzeugte Heißgas in den ringförmigen Strömungspfad der Gasturbine geführt, welcher sich entlang der Axialrichtung durch den Innenraum des Turbinenleitschaufelträgers erstreckt. Der Strömungspfad führt das eingespeiste Heißgas zum ausströmseitigen Ende des Turbinenleitschaufelträgers. Währenddessen entspannt sich das Heißgas im Strömungspfad arbeitsleistend an den Turbinenlaufschaufeln und gibt Wärme an seine Umgebung ab. Zudem wird die Temperatur des Heißgases durch die Zuführung von Kühlluft weiter verringert. Bekanntermaßen ergeben sich so höhere Eintrittstemperaturen als Austrittstemperaturen für das Heißgas.

Dies führt zu Materialtemperaturen im Turbinenleitschaufelträger, die am einströmseitigen Ende wesentlich höher sind als an dessen ausströmseitigen Ende, so dass sich in Axialrichtung des Turbinenleitschaufelträgers ein Temperaturgefälle einstellt, was zu unterschiedlichen thermischen Belastungen und unterschiedlichen Wärmedehnungen führt.

Durch allgemeine Bestrebungen zu weiter gesteigerten Turbineneintrittstemperaturen werden jedoch die Gehäusebauteile der Gasturbine und speziell der Turbinenleitschaufelträger thermisch und mechanisch weiter belastet. Auch das Temperaturgefälle wird dadurch vergrößert. Um eine ausreichende Lebensdauer des Turbinenleitschaufelträgers für eine Gasturbine mit weiter erhöhten Eintrittstemperaturen zu gewährleisten, kann es erforderlich sein, den Werkstoff, aus dem der Turbinenleitschaufelträger gefertigt ist, zu wechseln, da das Material den höheren Temperaturen dauerhaft standhalten muss. Üblicherweise sind temperaturfestere Werkstoffe jedoch wesentlich teurer als weniger wärmebeständigere konventionelle Werkstoffe.

Die der Erfindung zugrundeliegende Aufgabe bezüglich des Leitschaufelträges wird durch einen Leitschaufelträger gemäß den Merkmalen des Anspruchs 1 gelöst. Die auf die Gasturbinenanlage gerichtete Aufgabe wird durch eine Vorrichtung gemäß Anspruch 2 gelöst.

Die Erfindung sieht vor, dass im Kühlkanal des Leitschaufelträgers als Kühlmittel Natrium vorgesehen ist. Einerseits lässt sich hierdurch der Einsatz von Kühlluft oder Kühldampf vermeiden. Andererseits können auch die sonst noch erforderlichen zusätzlich Turbulatoren oder andere komplexe Geometrien sowie ggf. aufwändig gewundene Kühlkanäle entfallen. Durch die Verwendung von Natrium als Kühlmittel kann in besonders einfacher und effizienter Weise die von dem Fluid in das Material des Leitschaufelträgers übertragene Wärmeenergie weiter in das Kühlmedium überführt werden, welches dann den Abtransport der Wärme aus dem thermisch hochbelasteten Bereich gewährleistet.

Aufgrund der äußerst guten thermischen Eigenschaften des Natriums, insbesondere hinsichtlich der Wärmeübertragung und des Wärmeabtransports, können die im Leitschaufelträger vorzusehenden Kühlkanäle geometrisch besonders einfach gestaltet sein, was eine besonders einfache Herstellung dieser ermöglicht.

Durch die Kühlung des Leitschaufelträgers kann dieser aus einer kostengünstigeren, weniger hochlegierten Stahlgusssorte hergestellt werden, was die Produktionskosten senkt.

Eine Gasturbinenanlage mit einer Gasturbine, in der ein erfindungsgemäßer Leitschaufelträger vorgesehen ist, kann zudem einen Wärmeübertrager aufweisen, welcher gemäß einem weiteren Aspekt der Erfindung mit seiner Primärseite mit dem im Leitschaufelträger angeordneten Kühlkanal verbunden ist. Die von dem Natrium im Leitschaufelträger aufgenommene Wärmeenergie kann dann im Wärmeübertrager an ein weiteres Medium abgegeben werden, so dass das im Wärmeübertrager abgekühlte Natrium anschließend erneut zur Kühlung des Leitschaufelträgers diesem zugeführt werden kann. Insofern ergibt sich dadurch ein geschlossener Kühlkreislauf, in dem Natrium als Kühlmittel zirkuliert. Der Leitschaufelträger kann dabei einerseits in einer Turbineneinheit der Gasturbine angeordnet sein und am seiner inneren Mantelfläche die Turbinenleitschaufeln tragen. Alternativ oder zusätzlich kann der Leitschaufelträger auch in einer Verdichtereinheit der Gasturbine angeordnet sein. In beiden axialen Abschnitten der Gasturbinen können so hohe Temperaturen auftreten, die eine Kühlung der darin angeordneten Bauteile erforderlich machen.

Gemäß einer vorteilhaften Weiterbildung der Erfindung ist die Sekundärseite des Wärmeübertragers in ein Brennstoff-Versorgungsleitungssystem, durch den Brennstoff der Gasturbine zugeführt werden kann, zwischengeschaltet. Hierdurch lässt sich eine Vorwärmung des in der Gasturbine zu verbrennenden Brennstoffs erreichen, wodurch dieser effizienter und emissionsarmer zu einem Heißgas verbrannt werden kann. Die dem Leitschaufelträger entnommene Wärmeenergie kann somit nutzbringend verwendet werden. Eine ansonsten zur Vorwärmung des Brennstoffs erforderliche elektrische Heizvorrichtung kann somit entfallen. Dementsprechend entfallen sowohl die Anschaffungskosten für die zusätzliche elektrische Heizvorrichtung als auch deren Betriebskosten. Insgesamt führt dies zu einer besonders effizienten Gasturbinenanlage.

Durch die besonders effiziente Kühlung des Leitschaufelträgers können die in der Gasturbine auftretenden Temperaturen des Fluids, sei es Heißgas oder verdichtete Luft, weiter angehoben werden, ohne dass dadurch ein Materialwechsel zu einem hochlegierten Stahlguss für den Leitschaufelträger erforderlich wird.

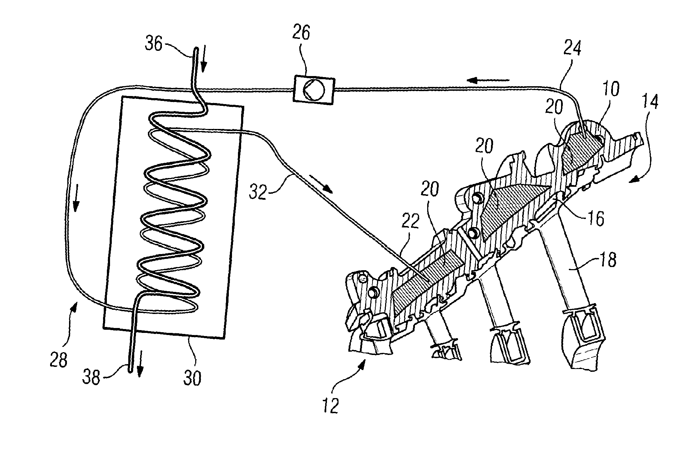

Die Erfindung wird anhand einer Zeichnung erläutert, wobei sich aus der gezeigten Figur und der zugehörigen Beschreibung weitere Merkmale und Vorteile der Erfindung ergeben. Die einzige Figur zeigt eine schematische Darstellung eines geschlossenen Kühlkreislaufs für einen Turbinenleitschaufelträger einer Gasturbine mit einem Wärmeübertrager.

In der einzigen, schematischen Zeichnung ist weiter rechts ein Längsschnitt durch einen erfindungsgemäßen Leitschaufelträger 10 dargestellt. Im Nachfolgenden wird die Erfindung exemplarisch anhand des in einer Turbine verwendeten Leitschaufelträgers 10 erläutert.

Der Turbinenleitschaufelträger 10 ist als konischer Ring ausgebildet, der einen einströmseitigen Bereich 12 und einen ausströmseitigen Bereich 14 aufweist. An der inneren Ringfläche des Turbinenleitschaufelträgers 10 sind in Umfangsrichtung verlaufende Nuten 16 vorgesehen, in die Leitschaufeln 18 der Turbineneinheit der Gasturbine eingeschoben und befestigt sind. In weiteren, nicht dargestellten Nuten können Führungsringe angeordnet sein, die den Spitzen von an einem Rotor angeordneten Laufschaufeln gegenüberliegen. Weitere, zur Gasturbine gehörende strukturellen Merkmale sind in diesem Abschnitt der Zeichnung nicht weiter dargestellt.

Der Turbinenleitschaufelträger 10 ist vergleichsweise massiv ausgeformt, so dass in seiner im Querschnitt rohrförmigen Wand mehrere, miteinander verbundene Kühlkanäle 20 ausgebildet sind. In den Kühlkanälen 20 ist als Kühlmittel Natrium vorgesehen. Die Kühlkanäle 20 sind in Reihe oder parallel geschaltet und weisen einen gemeinschaftlichen Einlass 22 sowie einen gemeinschaftlichen Auslass 24 für das Kühlmittel Natrium auf. Der Auslass 24 ist mit einer Fördereinrichtung 26 eingangsseitig verbunden, dessen Ausgang wiederum mit dem Eingang einer Primärseite 28 eines Wärmeübertragers 30 verbunden ist. Der primärseitige Ausgang 32 der Wärmeübertragers 30 ist mit dem Einlass 22 des Kühlkanals 20 verbunden, um somit einen geschlossenen Kreislauf für das Kühlmittel Natrium zu bilden. Der Wärmeübertrager 30 weist zudem einen Sekundärkreislauf mit einem Einlass 36 und einem Auslass 38 auf. Über den Einlass 36 ist dem Wärmeübertrager zur Kühlung des primärseitig geführten Natriums Brennstoff der Gasturbine zuführbar, welcher am Auslass 38 mit einer höheren Temperatur als am Einlass 36 abgreifbar ist. Die Sekundärseite des Wärmeübertragers 30 ist somit Teil eines Brennstoff-Versorgungssystems, mittels dem der Gasturbine Brennstoff zuführbar ist.

Während des Betriebs der Gasturbinenanlage wird in der Gasturbine von einem nicht weiter dargestellten Verdichter Umgebungsluft angesaugt und diese zu einem hochverdichteten Massenstrom verdichtet. Dieser wird in den Brennern mit einem flüssigen oder gasförmigen Brennstoff vermischt, welches Gemisch anschließend in der Brennkammer der Gasturbine zu einem Heißgas verbrannt wird. Das Heißgas durchströmt den Turbinenabschnitt der Gasturbine und entspannt sich dabei arbeitsleistend an den Turbinenleitschaufeln, welche den Rotor in eine Drehbewebung versetzen. Das Heißgas erwärmt die von ihm benachbarten Bauteile der Gasturbine und so auch den Turbinenleitschaufelträger 10.

Aufgrund der Bestrebungen, die Turbineneintrittstemperatur des Heißgases weiter anzuheben, ist es erforderlich, den Turbinenleitschaufelträger 10 zu kühlen, damit dieser den weiter erhöhten Temperaturen zuverlässig dauerhaft standhalten kann. Hierzu sind in der den Turbinenleitschaufelträger 10 bildenden Wand Kühlkanäle 20 vorgesehen, durch die Natrium strömbar ist. Das sich während des Betriebes der Gasturbine besonders effizient und einfach aufheizende Natrium wird durch eine Fördereinrichtung zum Wärmeübertrager 30 geführt. Dort kann die im Natrium vorhandene Wärmeenergie im Gegenstromverfahren an den sekundärseitig den Wärmeübertrager 30 durchströmenden Brennstoff abgegeben werden, so dass am primärseitigen Ausgang 32 des Wärmeübertragers 30 zur Kühlung des Turbinenleitschaufelträgers 10 geeignetes Natrium als Kühlmittel bereitgestellt werden kann.

Durch die Verwendung des bekannten Wärmeübertragerprinzips kann eine effiziente Vorgabe des Brennstoffs ohne den Bedarf einer zusätzlichen Heizvorrichtung ermöglicht werden. Zudem ist eine besonders einfache Geometrie der Kühlkanäle im Leitschaufelträger erforderlich, um diesen im ausreichenden Maße zu kühlen, damit dieser weiter erhöhten Turbineneintrittstemperaturen dauerhaft standhalten kann.

Mit der Erfindung wird somit ein Leitschaufelträger 10 für eine stationäre, axiale Strömung der Gasturbine angegeben, dessen Kühlkanälen 20 von einem Kühlmittel durchströmbar sind. Um eine besonders effiziente Kühlung des Turbinenleitschaufelträges 10 zu erreichen, schlägt die Erfindung vor, als Kühlmittel Natrium in den Kühlkanälen 20 vorzusehen, welches dann in einem geschlossenen Kreislauf einen und ggf. externen Wärmeübertrager 30 zur Vorwärmung das der Gasturbine zuführbaren Brennstoffs genutzt werden kann.

## Patentansprüche

1. Leitschaufelträger (10) für eine Gasturbine,
umfassend eine rohrförmige Wand mit einem einströmseitigen Ende (12) und einem dem einströmseitigen Ende (12) gegenüberliegendes ausströmseitiges Ende (14) für ein im Innenraum des Leitschaufelträgers (10) in einem Strömungspfad der Gasturbine strömendes Fluid,
wobei in der Wand zumindest ein Kühlkanal (20) für ein Kühlmittel vorgesehen ist,
**dadurch kennzeichnet, dass**
das im Kühlkanal (20) als Kühlmittel Natrium vorgesehen ist.

2. Gasturbinenanlage nach Anspruch 1,
mit einer Gasturbine,
umfassend einen Leitschaufelträger (10) nach Anspruch 1 und mit einem Wärmeübertrager (30),
der primärseitig mit dem im Leitschaufelträger (10) angeordneten Kühlkanal (20) verbunden ist.

3. Gasturbinenanlage nach Anspruch 2,
bei der der Leitschaufelträger (10) als Turbinenleitschaufelträger und/oder als Verdichterleitschaufelträger ausgebildet ist.

4. Gasturbinenanlage nach Anspruch 2 oder 3,
mit einem Brennstoff-Versorgungssystem,
in das zur Vorwärmung des Brennstoffs eine Sekundärseite des Wärmeübertragers (30) zwischengeschaltet ist.
